# EUROPEAN PATENT SPECIFICATION

(11) **EP 1 501 322 B1**
(45) Date of publication and mention of the grant of the patent: **14.11.2012**
(21) Application number: 04102759.0
(22) Date of filing: 16.06.2004
(51) Int. Cl.: H04W 84/08

(54) **Wireless communication unit, wireless communication system and method of communication**
Drahtlose Kommunikationseinheit, drahtloses Kommunikationssystem und Kommunikationsverfahren
Appareil de communication sans fil, système de communication sans fil et procédé de communication

(30) Priority: 25.07.2003 GB 0317375
(43) Date of publication of application: 26.01.2005
(73) Proprietor: Motorola Solutions Israel Limited, 70199 Airport City (IL)
(72) Inventor: OFIR, Gabi, 67899 Tel Aviv (IL); PIAMENTA, Moshe, 67899 Tel Aviv (IL); PORTNIK, Ilya, 67899 Tel Aviv (IL)
(74) Representative: Treleven, Colin

(56) References cited:
- GB-A- 2 362 292
- "TErrestrial Trunked RAdio (TETRA); Voice plus Data; Designers' Guide Part 3: Direct Mode Operation Edition 2; DRAFT ETR 300-3" ETSI STANDARDS, LIS, SOPHIA ANTIPOLIS CEDEX, FRANCE, vol. TETRA-1, no. .0.17, 17 September 2001 (2001-09-17), XP014041463 ISSN: 0000-0001

## Description

### Field of the Invention

This invention relates to a wireless communication unit, system and method. In particular, it relates to an improved use of limited wireless resources, for example in a TETRA direct mode wireless communication system. The inventive concepts are applicable to, but not limited to, utilising potentially redundant time slots, in such wireless communication systems to provide full-duplex communication.

### Background of the Invention

Wireless communication systems are distinguished over fixed communication systems, such as the public switched telephone networks (PSTN), principally in that subscriber units move between communication service areas and providers and in doing so encounter varying radio propagation environments. Therefore, the quality of a communication link to/from a subscriber unit varies as the subscriber unit changes location. The subscriber units are typically either vehicular-mounted 'mobile' or 'hand-portable' radio or cellular units. Henceforth, the term mobile station (MS) will be used for all such subscriber units. Wireless communication systems, for example cellular telephony or private mobile radio (PMR) communication systems, typically provide for radio telecommunication links to be arranged between a number of MSs.

In wireless communication systems, there are typically two methods of communicating between MSs. A first method is a direct communication between two MSs, as provided for in 'direct-mode' communication in a PMR communication system. A second method uses one or more intermediary station to forward a received communication from a first MS to a second MS, as provided in `trunked mode' communication or repeater-based DM communication in a PMR communication system or in a mobile cellular telephone communication system.

In a wireless private mobile radio (PMR) communication system, it is known that a MS may operate outside a dedicated network coverage area by communicating in a direct communication link with at least one other MS. Such a communication mode is generally referred to as Direct Mode Operation (DMO). This term is in contrast to Trunked Mode operation (TMO) that enables the MS to work within network coverage, with communications controlled and facilitated by a switching and management infrastructure (SwMI). Hence, when a MS operates in DMO, there is no system controller and therefore no centralised timing synchronisation or infrastructure-controlled power control to help minimise interference.

In direct-mode, communication links are established in a similar manner as to the back-to-back operation of conventional half-duplex radio schemes used by many existing private mobile radio systems such as that of the emergency services. The TETRA DMO standard is configured to allow two half-duplex calls to occur in the four time slots, termed "Frequency Efficient" mode.

Notably, full duplex communications (i.e. real-time communication in both the uplink and downlink directions) is not supported in the TETRA DMO standard. The provision of full-duplex calls typically aims to provide toll-quality voice communication, analogous to a normal telephone call. Furthermore, full-duplex calls are desirable as it is more comfortable for a user to hold a conversation without having to continuously depress the push-to-talk (PTT) button each time a user wants to speak.

A primary reason as to why half-duplex calls are supported within standards such as TETRA DMO is to allow time to switch between a transmit mode of operation and a receive mode of operation. Thus, to some degree, the communication unit needs to be (over) designed to facilitate very fast synthesizer switching and rapid synthesizer settling time.

A potentially resource-wasteful mechanism to provide full-duplex capabilities is to use two frequencies, one per direction. However, not only does this solution use the DM channels in an inefficient manner, the solution still requires the communication unit to be able to perform fast synthesizer switching and settling.

Thus, there exists a need to provide a wireless communication unit, a wireless communication system and method of operation wherein the aforementioned disadvantages may be alleviated.

GB-A-2362292 describes a system whereby up to four subscribers can communicate together in a conferencing call, using DMO. One of the four slots of a TETRA frame is used by each of the four subscribers.

### Summary of Invention

In accordance with a first aspect of the present invention there is provided a wireless subscriber communication unit (terminal). The wireless subscriber communication unit is capable of communication in a direct mode communication system employing a timing structure that does not readily support private full-duplex communication. Nevertheless, the wireless subscriber communication unit comprises a signal-processing unit having a private full-duplex call function configured to recognise a request for a private full-duplex communication and, in response to such recognition, modify the wireless subscriber communication unit's use of the timing structure to perform private full-duplex communication.

Preferably, the private full-duplex call function modifies the use by the wireless subscriber communication of the timing structure in one or more of the following ways: (i) reduces or removes a number of symbol timing recovery opportunities for a called wireless subscriber communication unit; (ii) reduces or removes a number of late entry opportunities for the wireless subscriber communication unit; (iii) reduces or removes a number of call pre-emption opportunities for the wireless subscriber communication unit; or (iv) reduces or removes a number of linearisation opportunities for the wireless subscriber communication unit.

In accordance with a second aspect of the present invention there is provided a method of communicating in a wireless direct mode communication system, as claimed in Claim 7.

Further aspects of the invention are as provided in the dependent Claims.

In this manner, a direct mode communication system and supported communication units can benefit from private full-duplex communication when the timing structure used had not previously supported such communication.

### Brief Description of the Drawings

Exemplary embodiments of the present invention will now be described, with reference to the accompanying drawings, in which:
FIG. 1 illustrates a simplified TETRA DMO communication system diagram, capable of supporting a preferred embodiment of the present invention;
FIG. 2 is a block circuit diagram illustrating a wireless communication unit adapted in accordance with embodiments of the present invention; and
FIG. 3 is a flowchart illustrating a procedure to support private full-duplex calls in a TETRA DMO communication system according to embodiments of the present invention.

### Description of embodiments of the invention

The inventive concepts of the present invention are described with reference to a TETRA DMO communication system. In summary, the preferred embodiment of the present invention proposes a mechanism to provide support for 'private full-duplex calls' within a timing structure that has been developed without supporting such calls. Advantageously, the provision of private full-duplex communication in the preferred embodiment of the present invention is achieved with a minimal impact on the generally available resources. Furthermore, the inventive concepts described herein provide the opportunity to manage two full duplex voice conversations on a single frequency channel, if so required.

The preferred embodiment of the present invention is described with reference to the TETRA direct mode of operation (DMO) standard. DMO is a mode of simplex operation where mobile subscriber radio units may communicate using radio frequencies, which may be monitored by, but which are outside the control of, a TETRA voice and data (V+D) trunked network. Thus, direct mode operation is performed without intervention of any base transceiver station. However, although the preferred embodiment of the present invention is described with reference to a TETRA DMO communication system, it is within the contemplation of the present invention that the inventive concepts are equally applicable to other wireless direct mode communication systems and other timing structures.

In order to understand the context of the present invention, let us first consider the TETRA DMO timing structure as it is currently defined. The TETRA timing structure uses a time division multiple access (TDMA) protocol. The timing structure is arranged, for each frequency channel, in super-frames, with each super-frame comprising eighteen (rolling) time frames. Each time frame is divided into four time slots.

According to the TETRA DMO standard there are two types of call:
(i) An individual call (sometimes referred to as a private call) or
(ii) A group call.
An individual call is a complete sequence of related call transactions between two DM-MSs. There are always two participants in an individual call. In contrast, a group call is a complete sequence of related call transactions involving two or more DM-MSs. The number of participants in a group call is not fixed, but is at least two.

Participants may join (late entry) and leave an ongoing DM group call on a DM channel. A DM channel is a specific grouping of timeslots in the DM multiplex structure related to a particular DM radio frequency carrier (i.e. DM frequency). The grouping may not always be fixed, but in DMO when operating in frequency efficient mode as an example, there are two DM channels, identified by the letters 'A' and 'B'.

A DM-MS may have one of three roles:
(i) A Master: if the DM-MS is either active in a call transaction transmitting traffic or control data, or is reserving the channel by means of channel reservation signalling;
(ii) A Slave: if the DM-MS is receiving traffic and/or signalling in a call; where a slave DM-MS role is divided into two subclasses:
   (a) 'Slave occupied': where the MS participates in a call; or
   (b) 'Idle occupied' or 'idle busy': where the MS not participating in a call; and
(iii) An idle mode: if the DM-MS is not participating in a call and the communication channel is free.

Referring now to Table 1 as follows, an example of a known TETRA DMO multi-frame structure, containing eighteen frames, and use to support uplink and downlink communication, is illustrated in tabular form.

**TABLE 1**

| **Frame** | **Slot 1 (Channel A)** | **Slot 2 (Channel B)** | **Slot 3 (Channel A)** | **Slot 4 (Channel B)** |
|---|---|---|---|---|
| 1 | Traffic (DNB) Tx/Rx | Traffic (DNB) Tx/Rx | | |
| 2 | Traffic (DNB) Tx/Rx | Traffic (DNB) Tx/Rx | Pre-emption (DSB) Rx/Tx | Pre-emption (DSB) Rx/Tx |
| 3 | Traffic (DNB) Tx/Rx | Traffic (DNB) Tx/Rx | Linearization (DLB) | Linearization (DLB) |
| 4 | Traffic (DNB) Tx/Rx | Traffic (DNB) Tx/Rx | | |
| 5 | Traffic (DNB) Tx/Rx | Traffic (DNB) Tx/Rx | Pre-emption (DSB) Rx/Tx | Pre-emption (DSB) Rx/Tx |
| 6 | Traffic (DNB) Tx/Rx | Traffic (DNB) Tx/Rx | Signalling (DSB) Tx/Rx | Signalling (DSB) Tx/Rx |
| 7 | Traffic (DNB) Tx/Rx | Traffic (DNB) Tx/Rx | | |
| 8 | Traffic (DNB) Tx/Rx | Traffic (DNB) Tx/Rx | Pre-emption (DSB) Rx/Tx | Pre-emption (DSB) Rx/Tx |
| 9 | Traffic (DNB) Tx/Rx | Traffic (DNB) Tx/Rx | | |
| 10 | Traffic (DNB) Tx/Rx | Traffic (DNB) Tx/Rx | | |
| 11 | Traffic (DNB) Tx/Rx | Traffic (DNB) Tx/Rx | Pre-emption (DSB) Rx/Tx | Pre-emption (DSB) Rx/Tx |
| 12 | Traffic (DNB) Tx/Rx | Traffic (DNB) Tx/Rx | Signalling (DSB) Tx/Rx | Signalling (DSB) Tx/Rx |
| 13 | Traffic (DNB) Tx/Rx | Traffic (DNB) Tx/Rx | | |
| 14 | Traffic (DNB) Tx/Rx | Traffic (DNB) Tx/Rx | Pre-emption (DSB) Rx/Tx | Pre-emption (DSB) Rx/Tx |
| 15 | Traffic (DNB) Tx/Rx | Traffic (DNB) Tx/Rx | | |
| 16 | Traffic (DNB) Tx/Rx | Traffic (DNB) Tx/Rx | | |
| 17 | Traffic (DNB) Tx/Rx | Traffic (DNB) Tx/Rx | Pre-emption (DSB) Rx/Tx | Pre-emption (DSB) Rx/Tx |
| 18 | Signalling (DSB) Tx/Rx | Signalling (DSB) Tx/Rx | Signalling (DSB) Tx/Rx | Signalling (DSB) Tx/Rx |

As seen in Table 1, there are several types of DMO frames, which may be configured to carry any combination of traffic or signalling data, such as:
(i) A 'Traffic + linearisation frame': to support traffic communication in a DMO Master/Slave arrangement, which additionally offers a DMO communication unit the opportunity to linearise its transmit output signal, e.g. frame '3';
(ii) A Single 'Traffic frame', offering purely traffic communication, e.g. frame '1';
(iii) A 'Traffic + Synchronisation (Sync) Frame': which offers a DMO communication unit the opportunity to perform late entry catch up and/or perform channel perception for those DMO communication units in an 'Idle Busy' mode, e.g. frame '6', frame '12' or frame '18; and
(iv) A 'Sync. + Sync. Frame': This offers a called Party DMO communication unit the opportunity to receive signalling information and/or to perform symbol time recovery (STR) and frequency correction (FC), e.g. frame '18', slot-1.

In summary, slot-3 in frames '6', '12' and '18', may be considered as a means to provide information to DM-MSs that are not participating in a DM call, i.e. all DM MSs receive signalling information sent on this time slot to maintain up-to-date knowledge of the DMO system's operation. In effect, due to the simplicity of DMO communications, the use of a dedicated slot-3 in this manner is somewhat equivalent to the use of a main control channel (MCCH) in a trunked communication system, where a dedicated channel is provided to relay such signalling information.

Furthermore, the signalling and physical information necessary for those DM-MSs that are participating in a DM call is sent in slot-1 of every frame '18'. Key physical attributes for a called DMO MS are Symbol Timing Recovery (STR) and Frequency Correction (FC). STR is a procedure by which the receiving (slave) MS adjusts its timing scheme/ timing reference to match the transmitting (Master) MS's timing scheme/ timing reference.
Receiving, processing and possibly adapting a timing scheme/ timing reference and/or frequency reference, is performed once every eighteen frames. Notably, the TETRA DMO standard specifies two slots every eighteen frames, which may be used to perform FC: slot-1 and slot-3 of frame '18'. Although there is no specific definition of slot roles in the TETRA DMO standard, the inventors of the present invention have interpreted Slot-1 of frame '18' as being provided for the sake of the call slave parties, whereas slot-3 of frame '18' is provided for the 'Idle busy' MSs.

Furthermore, a late entry MS has an opportunity every sixth frame to synchronize into an ongoing call, and determine whether it needs to join in (termed 'Slave Occupied') or remain passive (termed 'Idle Occupied' or 'Idle busy'). Thus, an 'Idle busy' mode means the channel is occupied by a TETRA DMO service in which the particular MS is not involved (i.e. the MS is 'idle').

Additionally, in frames '2', '5', '8', '11', '14' and '17', a slave DM-MS uses slot-3 for changeover or pre-emption requests (see ETS 300-396-3, para. 4.3.4). In frame '3', slot-3 is reserved for linearization purposes, as the TETRA standard requires a highly linear spectral output of its radio frequency transmissions to minimize interference with adjacent channel users. In this regard, particularly in the design of subscriber units, real-time feedback linearization structures are used, which typically require regular fine tuning to ensure stability and a power-efficient output.

Currently, the TETRA DMO timing structure defines a Frequency Efficient mode of operation, where two independent DM communications are supported on a single RF carrier. This is achieved by allocating slot-1 and slot-3 on a number of frames for a first call, and slot-2 and slot-4 on a number of frames for a second call; thereby allowing a slot's worth of time to switch between transmit and receive modes for each respective call. Notably, the preferred embodiment of the present invention describes a mechanism for slot-3 to be released from a management purpose and used for a conversation purpose. This enables the timing scheme features of frequency efficient mode to be used to allow support of a full-duplex call. This mode of operation is termed 'Frequency Efficient' in the TETRA DMO standard and is advantageously maintained when employing the inventive concepts herein described.

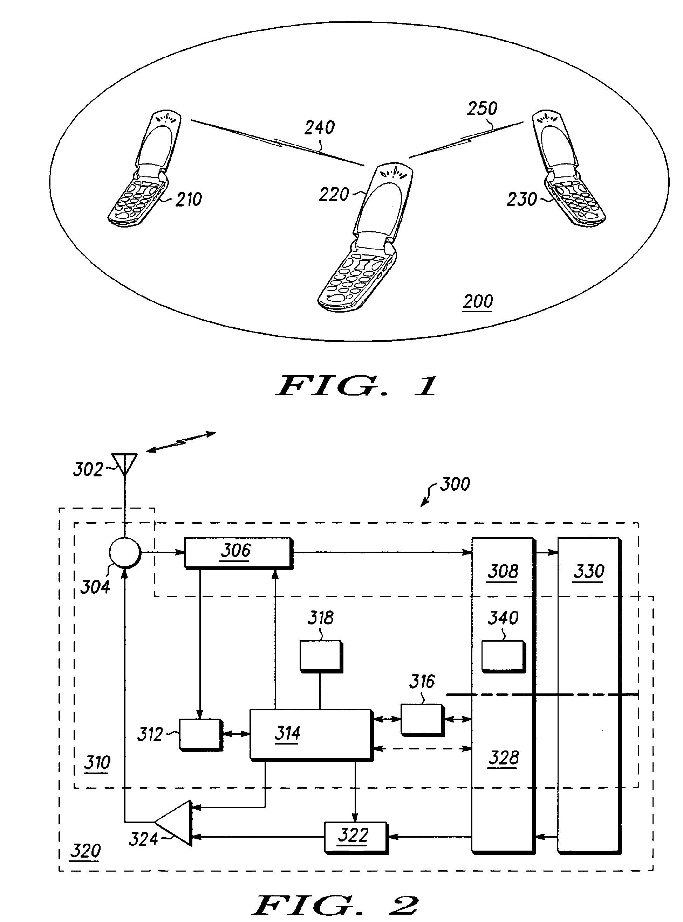

Referring now to FIG. 1, a DMO communication system 200, adapted to implement the preferred embodiment of the present invention, is shown. A first MS 210 and a second MS 220 have been adapted to allow a private full-duplex call 240 to be set up over the DM air interface. The adaptation of the timing of transmissions of the first MS 210 and second MS 220 effectively precludes a third MS 230 from participating 250 in the 'private' call using pre-emption. In a true DMO communication system many MSs will be able to communicate with each other at any instant in time, with only three MSs 210, 220 and 230 shown in FIG. 2 for clarity purposes. The adaptation of the first (and/or second) MS is further described with reference to FIG. 2.

In accordance with the preferred embodiment of the present invention, the TETRA DMO timing structure has been utilized in a different manner to that specified in the TETRA DMO standard to support private full-duplex Calls. The inventors of the present invention have recognised that, for an individual (sometimes referred to as 'private') call type, particular slots in the TETRA DMO timing structure may effectively be considered as redundant. In particular, the inventors propose the release of slot-3 to be used for a slave link to support a 'private full-duplex' call, if a MS so wishes. In this context, it is proposed that a PDU call set-up request uses one or more (currently undefined) bits to indicate that a private full-duplex communication is required. Once the Master and Slave DMO communication units have entered into the private full-duplex communication, according to the mode of operation described below, the slave DMO communication unit does not need to use slot-3 for any purpose other than the slave link to support private full-duplex communication.

Referring now to FIG. 2, there is shown a block diagram of a wireless subscriber unit 300 adapted to support the inventive concepts of the preferred embodiments of the present invention. Although the preferred embodiment of the present invention is described with reference to a wireless DMO subscriber unit, it is within the contemplation of the present invention that the inventive concepts can be applied equally to other wireless DMO communication units, such as a wireless DMO repeater. In addition, it is envisaged that any other digital communication unit based on interleaving of user data (U-PLANE) with control channel data (C-PLANE), which is not controlled by a dedicated controlling centre, can benefit from the inventive concepts described herein.

The wireless subscriber unit 300 contains an antenna 302 preferably coupled to a duplex filter or antenna switch 304 that provides isolation between a receiver chain 310 and a transmitter chain 320 within the wireless subscriber unit 300. As known in the art, the receiver chain 310 typically includes receiver front-end circuitry 306 (effectively providing reception, filtering and intermediate or base-band frequency conversion). The front-end circuit is serially coupled to a signal processing function 308. An output from the signal processing function is provided to a user-interface 330, which may comprise a display, speaker, etc.

The receiver chain 310 also includes received signal strength indicator (RSSI) circuitry 312 (shown coupled to the receiver front-end 306, although the RSSI circuitry 312 could be located elsewhere within the receiver chain 310). The RSSI circuitry is coupled to a controller 314 for maintaining overall subscriber unit control. The controller 314 is also coupled to the receiver front-end circuitry 306 and the signal processing function 308 (generally realised by a digital signal processor (DSP)).

The controller 314 may therefore receive bit error rate (BER) or frame error rate (FER) data from recovered information. The controller 314 is coupled to the memory device 316 for storing operating regimes, such as decoding/encoding functions and the like. A timer 318 is typically coupled to the controller 314 to control the timing of operations (transmission or reception of time-dependent signals) within the wireless subscriber unit 300.

As regards the transmit chain 320, this essentially includes user-interface 330 comprising elements such as a microphone, keypad, etc. coupled in series to a transmitter/modulation circuit 322. Thereafter, any transmit signal is passed through a RF power amplifier 324 to be radiated from the antenna 302. The transmitter/modulation circuitry 322 and the power amplifier 324 are operationally responsive to the controller, with an output from the power amplifier 324 coupled to the duplex filter or antenna switch 304. The transmitter/modulation circuitry 322 and receiver front-end circuitry 306 comprise frequency up-conversion and frequency down-conversion functions (not shown).

In particular, the operation of the signal-processing unit 308 has been adapted to provide an opportunity for the wireless subscriber unit 300 to operate in a full-duplex call. In this regard, the signal-processing unit 308 has been adapted to comprise a private full-duplex call function 340. The private full-duplex call function 340 is configured to recognise when a user wishes to enter into a private full-duplex call. In response to such a determination, the private full-duplex call function 340 adapts the timing parameters, transmission of information and processing of received data of the wireless subscriber unit 300 accordingly.

The various adapted components within one or more MS, say MS 210 or MS 220, can be realised in discrete or integrated component form. More generally, the functionality associated with generating or responding to a request for a private full-duplex communication, may be implemented in a respective communication unit in any suitable manner. For example, new apparatus may be added to a conventional communication unit, or alternatively existing parts of a conventional communication unit may be adapted, for example by reprogramming one or more processors 308 therein. As such, the required adaptation may be implemented in the form of processor-implementable instructions stored on a storage medium, such as a floppy disk, hard disk, programmable read-only memory (PROM), random access memory (RAM) or any combination of these or other storage media.

If the wireless subscriber unit 300 was operating in an 'Idle Occupied' mode of operation, it is proposed that its use of slot-3, as dictated by the private full-duplex call function 340 together with timer 318, is modified. In effect, the use of slot-1 and slot-3 has been specified, according to the TETRA DMO standard, for use as both frequency correction (FC) and Late Entry. The inventors of the present invention have appreciated that, for the purpose of FC, a single burst in eighteen frames is sufficient. As such, it is proposed that only slot-1 in frame '18' is used by the called party (slave) DMO communication unit, for the purpose of FC.

Similarly, the specified use of slot-3 in frames '6' and '12' for late entry purposes is modified by the private full-duplex call function 340. Currently, slot-3 exclusively carries synchronisation bursts. These bursts provide other MSs the necessary physical and logical information to synchronize their timing schemes/ timing references to that of the transmitting MS, and thereafter to decide whether to join in or not. The inventors of the present invention have appreciated that, in the context of a 'private duplex call', there is therefore no need to support 'Late Entry' of MSs, or indeed any other channel perception procedures. Since the call that is set up is a private one between the two parties, this information is no longer needed. Other MSs need not synchronize to the transmitting MS, as by implication they are not part of the 'private' call that has been set-up.

The inventors of the present invention have appreciated that, in the context of a 'private full-duplex call', there is also no need to support pre-emption. As a 'private full-duplex call' is effectively a two-way phone call, there is no need for one MS to pre-empt the other. Thus, the inventive concepts of the present invention propose that slot-3 is made free for use in a 'private full-duplex call', if required, and no slots are reserved for pre-emption. Changeover of a call (see ETS 300-396-3 para. 4.3.3), i.e. enabling a party to continue a conversation after a call has finished, is also not required because the call is terminated when one of the two participants of the 'private full-duplex call' releases the channel.

In addition, the inventors of the present invention have appreciated that, in the context of a 'private full-duplex call', there are mechanisms that are available that avoid the need to support on-going linearization. Primarily, a MS needs to perform a linearization routine in order to ensure that the transmitter is operating in a stable and linear manner before starting to transmit real data. The MSs typically utilize a real-time feedback loop such as Cartesian Feedback or Adaptive Pre-distortion technique to achieve and maintain a linearised output. It is known that once a call has commenced, each of the call parties should perform an initial linearization routine and thereafter to continue to perform a linearization procedure, particularly phase linearization, to ensure that the output remains stable. This is primarily due to the effect on loop phase due to variations in the MS's frequency, output power, temperature and voltage over time.

In accordance with a preferred embodiment of the present invention, it is proposed that on-going linearization procedures are not performed, thereby releasing slot-3 of frame '3' for use in a 'private duplex call'. For example, as frequency and output power levels in a 'private full-duplex call' are set when the call is initiated; the loop linearization parameters will likely not change significantly during the call, such that on-going linearization may not be needed. Alternatively, the transmit output power may be backed-off from its maximum power (by means of self-regulating power control), which would further reduce the variation in any of the loop linearization parameters and thereby any need to perform on-going linearization procedures.

Alternatively, the radio linearization training transmissions can be applied to a load resistor, as described in GB-A-2265269. In this regard, the various aspects of using a resistive load in a real-time linearization loop are incorporated herein by reference, thereby negating a need for a dedicated linearization training period.

In a yet further alternative, the loop linearization parameters can be adjusted by means of a look-up table, as described in GB-A-2265270. In this regard, the various aspects of using a look-up table to control loop linearization parameters are incorporated herein by reference, thereby negating a need for a dedicated linearization training period.

In this manner, the inventive concepts provide an enhancement to the TETRA DMO protocol set, in that the adapted timing scheme provides the basis for a new 'private full-duplex' call service. A preferred example of the adapted frame structure that is employed by the two MSs, for each frame in a private full-duplex TETRA DMO call, is represented in Table 2 as follows:

**TABLE 2**

| **Master Link** | | | | |
|---|---|---|---|---|
| **Frame** | **Slot 1 (Channel A)** | **Slot 2 (Channel B)** | **Slot 3 (Channel A)** | **Slot 4 (Channel B)** |
| 1 | Traffic (DNB) Tx | Traffic (DNB) Tx | Traffic (DNB) Rx | Traffic (DNB) Rx |
| 2 | Traffic (DNB) Tx | Traffic (DNB) Tx | Traffic (DNB) Rx | Traffic (DNB) Rx |
| 3 | Traffic (DNB) Tx | Traffic (DNB) Tx | Traffic (DNB) Rx | Traffic (DNB) Rx |
| 4 | Traffic (DNB) Tx | Traffic (DNB) Tx | Traffic (DNB) Rx | Traffic (DNB) Rx |
| 5 | Traffic (DNB) Tx | Traffic (DNB) Tx | Traffic (DNB) Rx | Traffic (DNB) Rx |
| 6 | Traffic (DNB) Tx | Traffic (DNB) Tx | Traffic (DNB) Rx | Traffic (DNB) Rx |
| 7 | Traffic (DNB) Tx | Traffic (DNB) Tx | Traffic (DNB) Rx | Traffic (DNB) Rx |
| 8 | Traffic (DNB) Tx | Traffic (DNB) Tx | Traffic (DNB) Rx | Traffic (DNB) Rx |
| 9 | Traffic (DNB) Tx | Traffic (DNB) Tx | Traffic (DNB) Rx | Traffic (DNB) Rx |
| 10 | Traffic (DNB) Tx | Traffic (DNB) Tx | Traffic (DNB) Rx | Traffic (DNB) Rx |
| 11 | Traffic (DNB) Tx | Traffic (DNB) Tx | Traffic (DNB) Rx | Traffic (DNB) Rx |
| 12 | Traffic (DNB) Tx | Traffic (DNB) Tx | Traffic (DNB) Rx | Traffic (DNB) Rx |
| 13 | Traffic (DNB) Tx | Traffic (DNB) Tx | Traffic (DNB) Rx | Traffic (DNB) Rx |
| 14 | Traffic (DNB) Tx | Traffic (DNB) Tx | Traffic (DNB) Rx | Traffic (DNB) Rx |
| 15 | Traffic (DNB) Tx | Traffic (DNB) Tx | Traffic (DNB) Rx | Traffic (DNB) Rx |
| 16 | Traffic (DNB) Tx | Traffic (DNB) Tx | Traffic (DNB) Rx | Traffic (DNB) Rx |
| 17 | Traffic (DNB) Tx | Traffic (DNB) Tx | Traffic (DNB) Rx | Traffic (DNB) Rx |
| 18 | Signalling (DSB) Tx | Signalling (DSB) Tx | Signalling (DSB) Rx | Signalling (DSB) Rx |

Table 2 indicates a preferred master link structure supporting two channels - 'A' and 'B'. As shown, the slots on each channel are maximally used for full-duplex traffic purposes, with only frame '18' remaining for signalling purposes. Note that the reverse transmit-receive operation will be employed in the slave link. Advantageously, this structure is consistent with the current 'frequency efficient' mode supported in the TETRA DMO standard.

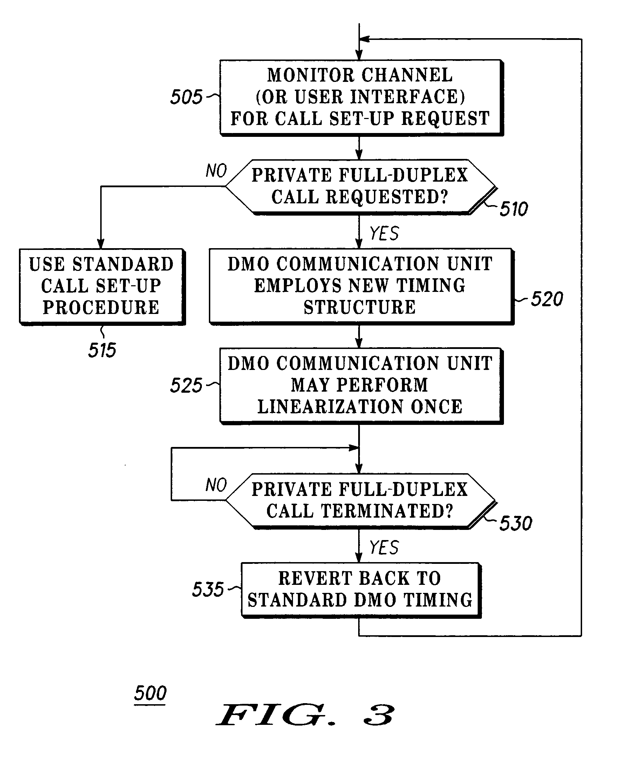

Referring now to FIG. 3, a flowchart 500 illustrates a preferred implementation of a private full-duplex call in a TETRA DMO communication system according to the preferred embodiment of the present invention. A DMO communication unit awaits notification that it is required in a call, as shown in step 505. If the DMO communication unit receives notification that it is required in a call, in step 510, it determines whether the call is to be a private full-duplex call or not, for example by checking the appropriate (flag) bits. If the requested call is not a private full-duplex call, in step 510, the DMO communication uses the standard TETRA DMO call set-up procedures, as shown in step 515, for either a normal half-duplex individual call offering pre-emption, changeover, etc. or a group call.

However, if the call is to be a private full-duplex call, in step 510, a new procedure is followed. If the DMO communication unit is to be the master party in (i.e. initiate) the private full-duplex call, it will receive a request from the user by the user interface. If the DMO communication unit is to be the slave party in the private full-duplex call, it will receive a call set-up request in the normal manner by receiving and processing an over-the-air message, albeit that the request will notably include a flag or other indication for a 'private full-duplex' call. In order to operate in a private full-duplex call, the (master and slave) DMO communication unit switches its timing reference/timing scheme to the new structure described above and illustrated in Table 2, as shown in step 520.
Preferably, the (master and slave) DMO communication unit also perform a full linearization process once, as in step 525, and enter into a full-duplex call.

Whilst the private full-duplex call is on-going, no other DMO communication unit is able to participate, as illustrated in step 530. Once the private full-duplex call is terminated, both (master and slave) DMO communication units revert back to standard TETRA DMO timing, as shown in step 535, and the process returns to step 505.

In an enhanced embodiment of the present invention, the call is preferably protected against accidental channel misperception by other MSs in two ways. First, according to the TETRA DMO standard relating to an "Initial determination of DM channel state" (as described by the European Telecommunication Standard Institute (ETSI) in ETS 300 396-3, paragraph 8.4.2.2.1), late-entry MSs are obliged to monitor the channel for at least nineteen frames. Therefore, any late-entry MS, which starts surveillance of the channel that they propose to use will inevitably receive (at least one) frame '18'. When the late-entry MS receives and processes frame '18', it will perceive the true channel state. Secondly, a MS that monitors a free channel will inevitably detect the 'private full duplex' call set-up transmissions on that free channel, and therefore recognise that channel as one that is not available.

It is within the contemplation of the invention that time slots dedicated for uses other than pre-emption, changeover, linearization or late-entry, for example in other direct-mode communication systems, may be reduced in number or removed altogether to facilitate private full-duplex communications.

Although the present invention has been described with reference to an unsynchronised TETRA DMO system, it is within the contemplation of the invention that any alternative digital communication system based on interleaving of user data (U-PLANE) with control channel data (C-PLANE), which is not controlled by a dedicated controlling centre, may benefit from the inventive concepts described herein.

It will be understood that the communication system, communication unit and method of sharing a communication resource, as described above, provide at least one or more of the following advantages:
(i) The mechanism provides the opportunity for one or two private full-duplex calls to be supported in a TETRA DMO scenario;
(ii) The mechanism provides the opportunity for one full-duplex call to be supported, together with a frequency efficient mode, in a TETRA DMO scenario; and
(iii) The mechanism provides the opportunity for one or two full-duplex point-to-point data links to be supported.

Whilst specific, and preferred, implementations of the present invention are described above, it is clear that one skilled in the art could readily apply variations and modifications of such inventive concepts.

Thus, in summary, the preferred embodiment of the present invention proposes a mechanism to provide support for a private full-duplex call using a minimum amount of resource. The preferred embodiment of the present invention has provided a communication system, a communication unit and a method of performing a full-duplex communication that substantially alleviates the aforementioned problems with prior art arrangements.

## Claims

1. A wireless subscriber communication unit (300) capable of communication in a direct mode communication system (200) employing a timing structure (100) that does not support private full-duplex communication, **characterized by** the wireless subscriber communication unit (300) including a signal processor (308) having a private full-duplex call function (340) operable:
(i) to recognise a request for a private full-duplex communication; and
(ii) in response to such a recognition, to modify operation of the wireless subscriber communication unit to perform private full-duplex communication, wherein the modification includes reducing a number of slots in the timing structure designated for use in DMQ, Direct Mode Operation, system signalling to make such slots available for private full-duplex communication.

2. A wireless subscriber communication unit (300) according to Claim 1, wherein the private full-duplex call function (340) is operable to modify the use by the wireless subscriber communication unit of the timing structure in one or more of the following ways:
(i) to reduce a number of symbol timing recovery opportunities for a called wireless subscriber communication unit;
(ii) to reduce a number of late entry opportunities for the wireless subscriber communication unit;
(iii) to reduce a number of call pre-emption opportunities for the wireless subscriber communication unit; and
(iv) to reduce a number of linearisation opportunities for the wireless subscriber communication unit (300).

3. A wireless subscriber communication unit (300) according to Claim 2, wherein the private full-duplex call function (340) is operable to modify the use by the wireless subscriber communication unit of the timing structure by removing a number of any one or more of the symbol timing recovery opportunities, the late entry opportunities, the pre-emption opportunities, and the linearisation opportunities for the wireless subscriber communication unit (300).

4. A wireless subscriber communication unit (300) according to any one preceding Claim, wherein the private full-duplex call function (340) is operable to modify a transmit protocol data unit to indicate a user requesting a private full-duplex communication.

5. A wireless subscriber communication unit (300) according to any one preceding Claim, wherein the wireless subscriber communication unit (300) is operable to communicate in a digital communication system based on interleaving of user data, U-PLANE, with control channel data, C-PLANE, such that the digital communication system is not controlled by a dedicated controlling centre.

6. A wireless subscriber communication unit (300) according to any one preceding Claim, wherein the wireless subscriber communication unit (300) is capable of communicating in a TETRA direct mode of operation.

7. A method (500) of communicating in a wireless direct mode communication system supporting communication between a plurality of wireless communication units via a timing structure, such that the timing structure (100) does not support private full-duplex communication;
wherein the method is **characterised by** the steps of:
recognising (510) a request for a private full-duplex communication; and
modifying (520), in response to such a recognition, a use of the timing structure (400) to perform private full-duplex communication, wherein the modification includes reducing a number of slots in the timing structure designated for use in DMO, Direct Mode Operation), system signaling, to make such slots available for private full-duplex communication.

8. A method of communicating in a wireless direct mode communication system according to Claim 7, wherein the method is further **characterised by** the step of:
receiving (510) a call set-up request that includes a flag or modified protocol data unit to indicate a request for a private full-duplex communication.

9. A method of communicating in a wireless direct mode communication system according to Claim 7 or Claim 8, wherein the step of modifying (520) comprises one or more of the following:
(i) reducing a number of symbol timing recovery opportunities for a called wireless subscriber communication unit;
(ii) reducing a number of late entry opportunities for the wireless subscriber communication unit;
(iii) reducing a number of call pre-emption opportunities for the wireless subscriber communication unit; and
(iv) reducing a number of linearisation opportunities for the wireless subscriber communication unit (300).

10. A method of communicating in a wireless dual-mode communication system according to Claim 9, wherein the steps of reducing comprise removing a number of any one or more of the symbol timing recovery opportunities, the late entry opportunities, the pre-emption opportunities, and the linearisation opportunities for the wireless subscriber communication unit (300).

11. A method according to any one of claims 7 to 10 wherein a radio frequency transmission message is sent from a first wireless communication unit to a second wireless communication unit on the wireless direct mode communication system (200), wherein the radio frequency transmission message comprises an element or flag indicating a call set-up request for a private full-duplex communication that requires the second communication unit to adapt its use of a wireless direct mode communication system's timing structure.

12. A method according to any one of claims 7 to 11, wherein the method operates by a timing structure according to the TETRA direct mode protocol.

## Patentansprüche

1. Drahtlose Teilnehmerkommunikationseinheit (300), die in der Lage ist, in einem Direktbetriebsartkommunikationssystem (200) zu kommunizieren, das eine Timingstruktur (100) einsetzt, die keine private Vollduplex-Kommunikation unterstützt, **dadurch gekennzeichnet, dass** die drahtlose Teilnehmerkommunikationseinheit (300) umfasst: einen Signalprozessor (308), der über eine private Vollduplex-Anruffunktion (340) verfügt, betriebsbereit:
(i) um eine Anforderung für eine private Vollduplex-Kommunikation zu erkennen; und
(ii) um, in Reaktion auf eine solche Erkennung, einen Betrieb der drahtlosen Teilnehmerkommunikationseinheit zu modifizieren, um eine private Vollduplex-Kommunikation durchzuführen, wobei die Modifikation umfasst:
Verringern einer Zahl von Schlitzen in der Timingstruktur, die für eine Verwendung in einer DMO-Systemsignalisierung (DMO = Direktbetriebsartbetrieb) vorgesehen sind, um solche Schlitze für eine private Vollduplex-Kommunikation bereitzustellen.

2. Drahtlose Teilnehmerkommunikationseinheit (300) gemäß Anspruch 1, wobei die private Vollduplex-Anruffunktion (340) betriebsbereit ist, um die Verwendung der Timingstruktur durch die drahtlose Teilnehmerkommunikationseinheit zu modifizieren:
(i) um eine Zahl von Symboltimingwiederherstellungsgelegenheiten für eine angerufene drahtlose Teilnehmerkommunikationseinheit zu verringern;
(ii) um eine Zahl von späten Eingabegelegenheiten für die drahtlose Teilnehmerkommunikationseinheit zu verringern;
(iii) um eine Zahl von Anrufvorwegnahmegelegenheiten für die drahtlose Teilnehmerkommunikationseinheit zu verringern; und/oder
(iv) um eine Zahl von Linearisierungsgelegenheiten für die drahtlose Teilnehmerkommunikationseinheit (300) zu verringern.

3. Drahtlose Teilnehmerkommunikationseinheit (300) gemäß Anspruch 2, wobei die private Vollduplex-Anruffunktion (340) betriebsbereit ist, um die Verwendung der Timingstruktur durch die drahtlose Teilnehmerkommunikationseinheit durch Entfernen einer Zahl der Symboltimingwiederherstellungsgelegenheiten, der späten Eingabegelegenheiten, der Vorwegnahmegelegenheiten und/oder der Linearisierungsgelegenheiten der drahtlosen Teilnehmerkommunikationseinheit (300) zu modifizieren.

4. Drahtlose Teilnehmerkommunikationseinheit (300) gemäß einem der vorangehenden Ansprüche, wobei die private Vollduplex-Anruffunktion (340) betriebsbereit ist, um eine Übertragungsprotokolldateneinheit zu modifizieren, um einen Anwender anzuzeigen, der eine private Vollduplex-Kommunikation anfordert.

5. Drahtlose Teilnehmerkommunikationseinheit (300) gemäß einem der vorangehenden Ansprüche, wobei die drahtlose Teilnehmerkommunikationseinheit (300) betriebsbereit ist, um in einem digitalen Kommunikationssystem, basierend auf ein Verschachteln von Anwenderdaten, U-EBENE, mit Steuerkanaldaten, C-EBENE, zu kommunizieren, sodass das digitale Kommunikationssystem nicht durch die dedizierte Steuerzentrale gesteuert wird.

6. Drahtlose Teilnehmerkommunikationseinheit (300) gemäß einem der vorangehenden Ansprüche, wobei die drahtlose Teilnehmerkommunikationseinheit (300) in der Lage ist, in einem TETRA-Direktbetriebsartbetrieb zu kommunizieren.

7. Verfahren (500) eines Kommunizierens in einem drahtlosen Direktbetriebsartkommunikationssystem, das eine Kommunikation zwischen einer Mehrzahl von drahtlosen Kommunikationseinheiten über eine Timingstruktur unterstützt, so dass die Timingstruktur (100) keine private Vollduplex-Kommunikation unterstützt;
wobei das Verfahren durch die folgenden Schritte gekennzeichnet ist:
Erkennen (510) einer Anforderung einer privaten Vollduplex-Kommunikation; und
Modifizieren (520), in Reaktion auf eine solche Erkennung, einer Verwendung der Timingstruktur (400), um eine private Vollduplex-Kommunikation durchzuführen, wobei die Modifikation umfasst: Verringerung einer Zahl von Schlitzen in der Timingstruktur, die für eine Verwendung in einer DMO-Systemsignalisierung (DMO = Direktbetriebsartbetrieb) vorgesehen sind, um solche Schlitze für eine private Vollduplex-Kommunikation bereitzustellen.

8. Verfahren eines Kommunizierens in einem drahtlosen Direktbetriebsartkommunikationssystem gemäß Anspruch 7, wobei das Verfahren weiterhin durch den folgenden Schritt gekennzeichnet ist:
Empfangen (510) einer Verbindungsaufbauanforderung, die umfasst: einen Anzeiger oder eine modifizierte Protokolldateneinheit, um eine Anforderung einer privaten Vollduplex-Kommunikation anzuzeigen.

9. Verfahren eines Kommunizierens in einem drahtlosen Direktbetriebsartkommunikationssystem gemäß Anspruch 7 oder Anspruch 8, wobei der Schritt eines Modifizierens (520) umfasst:
(i) Verringern einer Zahl von Symboltimingwiederherstellungsgelegenheiten für eine angerufene drahtlose Teilnehmerkommunikationseinheit;
(ii) Verringern einer Zahl von späten Eingabegelegenheiten für die drahtlose Teilnehmerkommunikationseinheit;
(iii) Verringern einer Zahl von Anrufvorwegnahmegelegenheiten für die drahtlose Teilnehmerkommunikationseinheit; und/oder
(iv) Verringern einer Zahl von Linearisierungsgelegenheiten für die drahtlose Teilnehmerkommunikationseinheit (300).

10. Verfahren eines Kommunizierens in einem drahtlosen bimodalen Kommunikationssystem gemäß Anspruch 9, wobei die Schritte eines Verringerns umfassen: Entfernen einer Zahl der Symboltimingwiederherstellungsgelegenheiten, der späten Eingabegelegenheiten, der Vorwegnahmegelegenheiten und/oder der Linearisierungsgelegenheiten der drahtlosen Teilnehmerkommunikationseinheit (300).

11. Verfahren gemäß einem der Ansprüche 7 bis 10, wobei eine Funkfrequenzübertragungsnachricht von einer ersten drahtlosen Kommunikationseinheit an eine zweite drahtlose Kommunikationseinheit in einem drahtlosen Direktbetriebsartkommunikationssystem (200) gesendet wird, wobei die Funkfrequenzübertragungsnachricht umfasst: ein Element oder einen Anzeiger, der eine Verbindungsaufbauanforderung für eine private Vollduplex-Kommunikation anzeigt, die erfordert, dass die zweite Kommunikationseinheit ihre Verwendung der Timingstruktur eines drahtlosen Direktbetriebsartkommunikationssystems anpasst.

12. Verfahren gemäß einem der Ansprüche 7 bis 11, wobei das Verfahren durch eine Timingstruktur gemäß dem TETRA-Direktbetriebsartprotokoll arbeitet.

## Revendications

1. Unité de communication d'abonnés sans fil (300) apte à communiquer dans un système de communication en mode direct (200) employant une structure de temporisation (100) qui ne prend pas en charge la communication en mode duplex intégral privé, **caractérisée en ce que** l'unité de communication d'abonnés sans fil (300) comprend un processeur de signaux (308) présentant une fonction d'appel en mode duplex intégral privé (340) exploitable de manière à :
(i) reconnaître une demande pour une communication en mode duplex intégral privé ; et
(ii) en réponse à une telle reconnaissance, modifier l'exploitation de l'unité de communication d'abonnés sans fil en vue de mettre en oeuvre une communication en mode duplex intégral privé, dans laquelle la modification comprend la réduction d'un nombre de tranches dans la structure de temporisation désignée en vue d'une utilisation dans une signalisation de système d'exploitation en mode direct, DMO, afin de rendre disponible de telles tranches pour une communication en mode duplex intégral privé.

2. Unité de communication d'abonnés sans fil (300) selon la revendication 1, dans laquelle la fonction d'appel en mode duplex intégral privé (340) est exploitable de manière à modifier l'utilisation, par l'unité de communication d'abonnés sans fil, de la structure de temporisation, d'une ou plusieurs des manières ci-dessous consistant à :
(i) diminuer un nombre de possibilités de récupération de temporisation de symboles pour une unité de communication d'abonnés sans fil appelée ;
(ii) diminuer un nombre de possibilités d'entrées tardives pour l'unité de communication d'abonnés sans fil ;
(iii) diminuer un nombre de possibilités de préemptions d'appels pour l'unité de communication d'abonnés sans fil ; et
(iv) diminuer un nombre de possibilités de linéarisations pour l'unité de communication d'abonnés sans fil (300).

3. Unité de communication d'abonnés sans fil (300) selon la revendication 2, dans laquelle la fonction d'appel en mode duplex intégral privé (340) est exploitable de manière à modifier l'utilisation, par l'unité de communication d'abonnés sans fil, de la structure de temporisation, en supprimant un nombre de l'une quelconque ou plusieurs parmi les possibilités de récupération de temporisation de symboles, les possibilités d'entrées tardives, les possibilités de préemptions et les possibilités de linéarisations pour l'unité de communication d'abonnés sans fil (300).

4. Unité de communication d'abonnés sans fil (300) selon l'une quelconque des revendications précédentes, dans laquelle la fonction d'appel en mode duplex intégral privé (340) est exploitable de manière à modifier une unité de données de protocole de transmission pour indiquer un utilisateur demandant une communication en mode duplex intégral privé.

5. Unité de communication d'abonnés sans fil (300) selon l'une quelconque des revendications précédentes, dans laquelle l'unité de communication d'abonnés sans fil (300) est exploitable de manière à communiquer dans un système de communication numérique sur la base d'un entrelacement de données d'utilisateur, U-PLANE, avec des données de canal de commande, C-PLANE, de sorte que le système de communication numérique n'est pas commandé par un centre de commande dédié.

6. Unité de communication d'abonnés sans fil (300) selon l'une quelconque des revendications précédentes, dans laquelle l'unité de communication d'abonnés sans fil (300) est apte à communiquer dans un mode d'exploitation direct TETRA.

7. Procédé (500) de communication dans un système de communication en mode direct sans fil prenant en charge une communication entre une pluralité d'unités de communication sans fil par l'intermédiaire d'une structure de temporisation, de sorte que la structure de temporisation (100) ne prend pas en charge une communication en mode duplex intégral privé ;
dans lequel le procédé est **caractérisé par** les étapes ci-dessous consistant à :
reconnaître (510) une demande pour une communication en mode duplex intégral privé ; et
modifier (520), en réponse à une telle reconnaissance, une utilisation de la structure de temporisation (400) en vue de mettre en oeuvre une communication en mode duplex intégral privé, dans lequel la modification comprend la réduction d'un nombre de tranches dans la structure de temporisation désignée en vue d'une utilisation dans une signalisation de système d'exploitation en mode direct, DMO, afin de rendre disponible de telles tranches pour une communication en mode duplex intégral privé.

8. Procédé de communication dans un système de communication en mode direct sans fil selon la revendication 7, dans lequel le procédé est **caractérisé en outre par** l'étape ci-dessous consistant à :
recevoir (510) une demande d'établissement d'appel qui comprend un fanion, ou une unité de données de protocole modifiée, en vue d'indiquer une demande pour une communication en mode duplex intégral privé.

9. Procédé de communication dans un système de communication en mode direct sans fil selon la revendication 7 ou 8, dans lequel l'étape de modification (520) comprend une ou plusieurs des étapes ci-dessous consistant à :
(i) diminuer un nombre de possibilités de récupération de temporisation de symboles pour une unité de communication d'abonnés sans fil appelée ;
(ii) diminuer un nombre de possibilités d'entrées tardives pour l'unité de communication d'abonnés sans fil ;
(iii) diminuer un nombre de possibilités de préemptions d'appels pour l'unité de communication d'abonnés sans fil ; et
(iv) diminuer un nombre de possibilités de linéarisations pour l'unité de communication d'abonnés sans fil (300).

10. Procédé de communication dans un système de communication sans fil à mode double selon la revendication 9, dans lequel les étapes de diminution comprennent la suppression d'un nombre de l'une quelconque ou plusieurs parmi les possibilités de récupération de temporisation de symboles, les possibilités d'entrées tardives, les possibilités de préemptions, et les possibilités de linéarisations pour l'unité de communication d'abonnés sans fil (300).

11. Procédé selon l'une quelconque des revendications 7 à 10, dans lequel un message de transmission de fréquence radio est envoyé d'une première unité de communication sans fil à une seconde unité de communication sans fil sur le système de communication en mode direct sans fil (200), dans lequel le message de transmission de fréquence radio comprend un élément ou un fanion indiquant une demande d'établissement d'appel pour une communication en mode duplex intégral privé qui nécessite la seconde unité de communication afin d'adapter son utilisation d'une structure de temporisation du système de communication en mode direct sans fil.

12. Procédé selon l'une quelconque des revendications 7 à 11, dans lequel le procédé est exploité par une structure de temporisation selon le protocole à mode direct TETRA.
